# EUROPÄISCHE PATENTSCHRIFT

(11) **EP 1 558 476 B1**
(45) Veröffentlichungstag und Bekanntmachung des Hinweises auf die Patenterteilung: **08.08.2007**
(21) Anmeldenummer: 03778293.5
(22) Anmeldetag: 29.10.2003
(51) Int. Cl.: B60S 1/40

(54) **ADAPTER FÜR EIN WISCHBLATT**
ADAPTER FOR A WIPER BLADE
ADAPTATEUR POUR UN BALAI D'ESSUIE-GLACE

(30) Priorität: 04.11.2002 DE 10251520
(43) Veröffentlichungstag der Anmeldung: 03.08.2005
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 74321 Bietigheim-Bissingen (DE)
(74) Vertreter: Jahn, Wolf-Diethart
(86) Internationale Anmeldenummer: PCT/EP2003/012000
(87) Internationale Veröffentlichungsnummer: WO 2004/041605

(56) Entgegenhaltungen:
- WO-A-00/73113
- US-A- 4 007 511
- US-A- 4 083 642

## Beschreibung

Die Erfindung betrifft einen Adapter zur Adaption eines Hauptbügels eines Wischblatts mit dem Kopplungsabschnitt eines Wischarms einer Wischvorrichtung für Flachwischblätter.

In zunehmenden Maße verbreiten sich Fahrzeuge mit Wischvorrichtungen, die sogenannte Flachwischblätter aufweisen. Die Flachwischblätter zeichnen sich dadurch aus, dass sie kein kaskadenartiges Bügelsystem aufweisen, sondern ein oder mehrere sich in Wischblattlängsrichtung erstreckende, entsprechend vorgekrümmte elastische Trageelemente. Unter dem Anpressdruck legt sich ein derartiges Wischblatt mit seiner Wischlippe über seine gesamte Länge an der zu wischenden Scheibenoberfläche an. Dabei baut sich im elastischen Trageelement eine Spannung auf, die für eine ordnungsgemäße Anlage der Wischleiste über deren gesamte Länge an der Scheibe sorgt.

Zur Befestigung eines solchen Flachwischblattes an dem freien Ende des Wischarms ist aus der WO 00/73113 A1 bekannt geworden, den Kopplungsabschnitt des Wischarms mit einem einendig angeordneten Gelenkbolzen und mit einem im Querschnitt L- oder U-förmig ausgebildeten Ansatz auszubilden. Der Ansatz weist hierbei einen senkrecht zur Längsachse des Gelenkbolzens verlaufenden seitlichen Anschlag auf, der in Wischarmlängsrichtung zur Achse des Gelenkbolzens beabstandet angeordnet ist. Durch diese spezielle Ausbildung des Kopplungsabschnitts des Wischarms und eine komplementäre Ausbildung des Befestigungsabschnitts des Wischblatts, wie sie in der WO 00/73113 A1 beschrieben sind, kann ein schnelles und einfaches Lösen durch Verschwenken des Wischblatts erreicht werden.

Es hat sich allerdings gezeigt, dass an den Kopplungsabschnitt derartiger Wischarme ausschließlich dafür vorgesehene Flachwischblätter anordenbar sind. Aufgrund der relativ geringen Verbreitung der Flachwischblätter sind diese nur bedingt verfügbar.
Der vorliegenden Erfindung liegt deshalb die Aufgabe zugrunde, für den Fall Abhilfe zu schaffen, dass selbst bei Nichtverfügbarkeit von Flachwischblättern mit speziell ausgebildetem Befestigungsabschnitt eine ordnungsgemäße Wischung der Scheiben gewährleistet wird.

Diese Aufgabe wird gelöst durch einen Adapter, mit einem einendig gehaltenen Einsteckbolzen zur seitlichen Einführung in eine sich quer zur Wischblattlängsachse erstreckende Aufnahmeöffnung am Hauptbügel, mit einer am Einsteckbolzen vorgesehenen, eine Einführöffnung aufweisenden Zylinderaussparung zur Aufnahme eines Gelenkbolzens des Kopplungsabschnitts des Wischarms, wobei im Bereich der Einführöffnung ein erster Anlageabschnitt vorgesehen ist zur Anlage des den Gelenkbolzen haltenden Bereich des Kopplungsabschnitts, und wobei der Adapter einen auf der der Einführöffnung abgewandten Seite angeordneten zweiten Anlageabschnitt aufweist zur Anlage des Anschlages eines den Adapter im montierten Zustand wenigstens abschnittsweise übergreifenden Ansatzes des Kopplungsabschnitts.

Hierdurch wird vorteilhafterweise erreicht, dass auch bekannte, weltweit verfügbare Bügelwischblätter, wie sie seit Jahrzehnten Verwendung finden, an den Wischarm einer Wischvorrichtung, die für Flachwischblätter vorgesehen ist, angeordnet werden können. Folglich kann die Betriebssicherheit des entsprechenden Fahrzeugs auch ohne des eigentlich vorgesehenen Flachwischblatts aufgrund des erfindungsgemäßen Adapters durch ein verfügbares Bügelwischblatt erreicht werden. Zur Montage des Adapters wird der Adapter seitlich mit dem Einsteckbolzen in die Aufnahmeöffnung am Hauptbügel eingesteckt. Danach wird der Adapter um die Achse des Einsteckbolzens in die Endmontageposition geschwenkt.

Um ein bedingtes Verschwenken des Wischblatts gegenüber dem Wischarm zu ermöglichen ist es vorteilhaft, wenn der erste und/oder der zweite Anlageabschnitt in Querrichtung derart erhaben ausgebildet ist, dass im montierten Zustand die jeweilige Seitenwand des Hauptbügels überragt wird. Dadurch werden definierte Berührungspunkte zwischen dem Adapter und Kopplungsabschnitt realisiert. Dabei ist vorzugsweise der erste Anlageabschnitt in Wischblattlängsrichtung von dem zweiten Anlageabschnitt beabstandet angeordnet.

Die Zylinderaussparung, die zur Aufnahme des Gelenkbolzens des Wischarms dient, kann hierbei beispielsweise als Durchgangsloch oder als Sackloch ausgebildet sein. Die Verwendung eines Sackloches trägt insoweit zur Montagesicherheit bei, als der Gelenkbolzen des Wischarms lediglich in einer Richtung in die Zylinderaussparung einführbar ist. Bei Vorsehen eines Sackloches als Zylinderaussparung ist vorteilhaft, eine Entlüftungsöffnung im Bodenbereich des Sacklochs vorzusehen. Hierdurch kann beispielsweise Regenwasser, das in das Sackloch eindringt, abtrocknen.

Je nach Breite des Hauptbügels beziehungsweise je nach dem Öffnungsmaß des Sicherungsabschnitts des Wischarm, weist der zweite Anlageabschnitt des Adapters wenigstens ansatzweise eine Wange auf, die im montierten Zustand eine Seitenwand des Hauptbügels wenigstens bedingt umgreift. Hierdurch werden auf das Wischblatt einwirkende Seitenkräfte sicher in den Wischarm abgeleitet.

Je nach Ausführungsform des Hauptbügels und des Kopplungsabschnitts des Wischarms ist der Anlageabschnitt im Querschnitt L-förmig oder U-förmig ausgebildet.

Um eine spielarme Führung zwischen Adapter und Kopplungsabschnitt des Wischarms und/oder des Hauptbügels zu erlangen, ist bei einer weiteren Ausführungsform der Erfindung vorgesehen, dass die sich in Querrichtung erstreckende Breite des Anlageabschnitts im montierten Zustand weitgehend formschlüssig vom Ansatz und Anschlag des Kopplungsabschnitts des Wischarms umgriffen wird.

Der Adapter kann im montierten Zustand entweder drehfest am Hauptbügel oder drehfest am Wischarm gehalten sein. Wird der Adapter drehfest am Wischarm gehalten, so hat dies den Vorteil, dass der Verschleiß an den bewegten Teilen zwischen dem Wischblatt und dem Adapter auftritt. Verschleißteile sind folglich Austauschteile. Der Kopplungsabschnitt des Wischarms unterliegt dann keinem Verschleiß.

Zur drehfesten Halterung des Adapters kann vorgesehen sein, dass der Adapter wenigstens einen Rastabschnitt zur Verrastung mit dem Hauptbügel oder dem Ansatz beziehungsweise dem Anschlag des Wischarms aufweist. Dabei ist vorteilhaft, wenn der Rastabschnitt beziehungsweise die Rastabschnitte am Anlageabschnitt oder an wenigstens einer Wange des Anlageabschnitts angeordnet sind.

Um eine sichere Hinterrastung am Hauptbügel beziehungsweise am Ansatz zu erreichen, kann vorgesehen sein, dass der Rastabschnitt beziehungsweise die Rastabschnitte an dem freien Ende beziehungsweise den freien Enden der Wangen des entsprechenden Anlageabschnitts angeordnet sind. Dadurch wird die entsprechende Seitenwand des Hauptbügels nicht nur um-, sondern hintergriffen.

Der Adapter ist vorzugsweise so ausgebildet, dass zwischen dem Einsteckbolzen und dem zweiten Anlageabschnitt ein sich in Wischblattlängsrichtung erstreckender Schenkel vorgesehen ist, der im montierten Zustand wenigstens abschnittsweise an der ihm zugewandten Seitenwand des Hauptbügels anliegt. Um keinen zusätzlichen Luftwiderstand hervorzurufen, überragt der Schenkel in Seitenansicht die Seitenwände des Hauptbügels nicht.

Weitere Vorteile und vorteilhafte Ausgestaltungen der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: einen an einem Hauptbügel eines Wischblatts montierten ersten erfindungsgemäßen Adapter in Seitenansicht,
- Figur 2: einen Schnitt entlang der Linie II durch den Hauptbügel gemäß Figur 1,
- Figur 3: einen Schnitt entlang der Linie III in Figur 2,
- Figur 4: eine teilweise freigeschnittene Unteransicht eines zweiten erfindungsgemäßen Adapters an einem Kopplungsabschnitt eines Wischarms,
- Figur 5: einen Schnitt entlang der Linie V in Figur 4 und
- Figur 6: eine perspektivische Ansicht des Adapters gemäß Figur 4 von schräg oben.

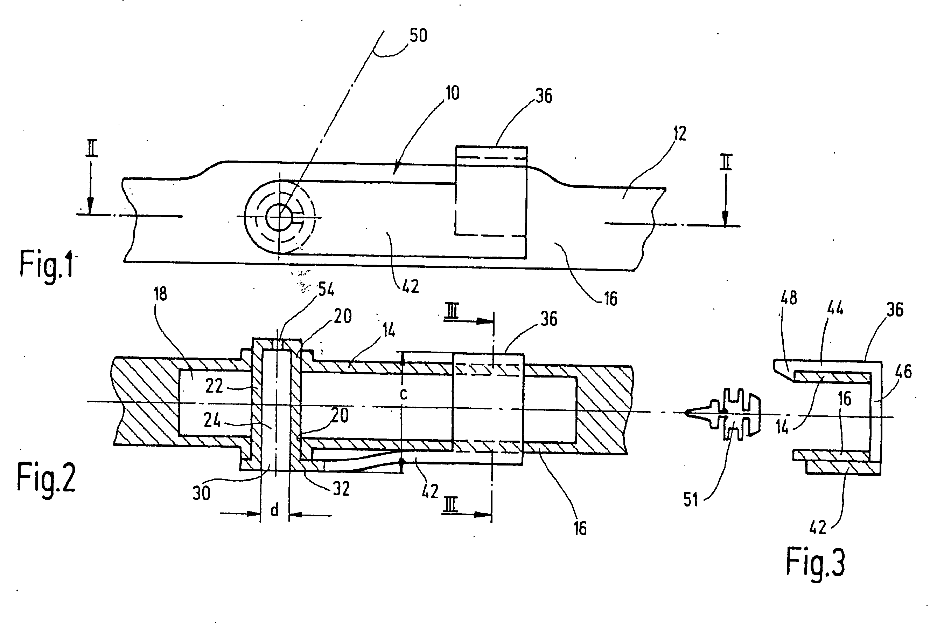

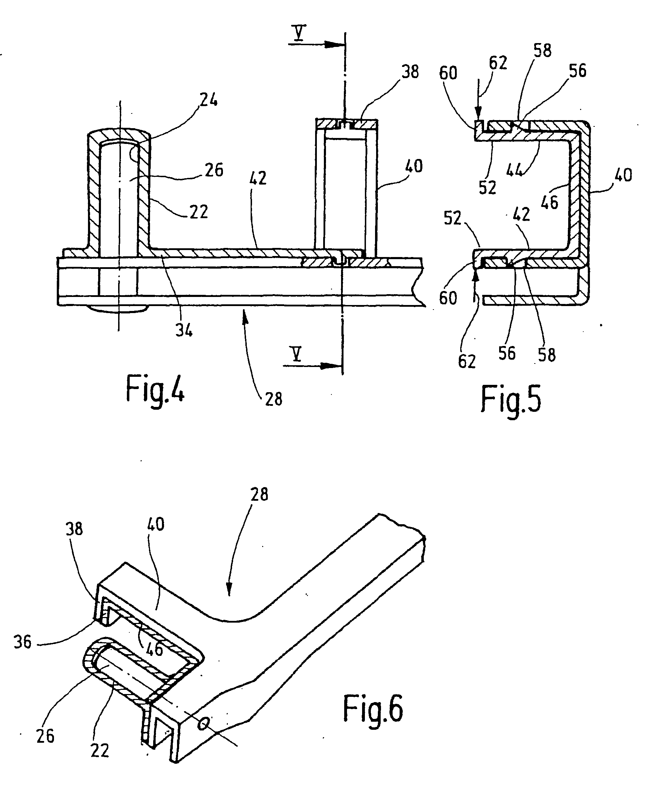

Der in den Figuren 1 bis 3 gezeigte erfindungsgemäße Adapter 10 ist an einem Hauptbügel 12 eines nicht dargestellten kaskadenartig aufgebauten Bügelwischblatts angeordnet. Der Hauptbügel 12 weist zwei Seitenwände 14, 16 auf, die einen Einhängekasten 18 begrenzen. Die beiden Seitenwände 14, 16 sehen jeweils eine sich quer zur Längsachse erstreckende Aufnahmeöffnung 20 vor, in die ein einendig gehaltener Einsteckbolzen 22 des Adapters 10 eingeführt ist. Der Einsteckbolzen 22 weist eine Zylinderaussparung 24 zur Aufnahme eines Gelenkbolzens 26 auf, der in den Figuren 4 und 6 am Kopplungsabschnitt 28 eines nicht dargestellten Wischarmes angeordnet ist. Wie aus Figur 2 deutlich wird, weist der Adapter 10 im Bereich der Einführöffnung 30 einen ersten Anlageabschnitt 32 zur Anlage des den Gelenkbolzen 26 haltenden Bereich 34 des Kopplungsabschnitts 28 auf. Auf der Einführöffnung 30 abgewandten Seite weist der Adapter 10 einen zweiten Anlageabschnitt 36 auf. Der zweite Anlageabschnitt 36 dient zur Anlage eines Anschlags 38 eines den Adapter 10 im montierten Zustand wenigstens abschnittsweise übergreifenden Ansatzes 40 des Kopplungsabschnitts 28.

Bei dem in den Figuren 1 bis 3 gezeigten Adapter ist der erste Anlageabschnitt 32 und der zweite Anlageabschnitt 36 in Querrichtung derart erhaben ausgebildet, dass in am Hauptbügel 12 montierten Zustand die Seitenwände 14, 16 überragt werden. Hierdurch wird gewährleistet, dass zwischen dem Kopplungsabschnitt 28 und dem Hauptbügel 12 kein direkter Kontakt besteht. Aus Figur 2 wird ebenfalls deutlich, dass der erste Anlageabschnitt 32 in Längsrichtung von dem zweiten Anlageabschnitt 36 beabstandet angeordnet ist.

Zwischen dem ersten Anlageabschnitt 32 und dem zweiten Anlageabschnitt 36 weist der Adapter 10 einen sich in Längsrichtung erstreckenden Schenkel 42 auf. Wie aus Figur 1 deutlich wird, ist der Schenkel 42 schmaler als die Seitenwände 14, 16 ausgebildet, so dass er die Seitenwände 14, 16 nicht überragt.

Der zweite Anlageabschnitt 36 ist im Querschnitt, wie er in der Figur 3 dargestellt ist, U-förmig ausgebildet, wobei eine an der Seitenwand 14 anliegende Wange 44 vorgesehen ist. Die insbesondere in der Figur 3 deutlich zu erkennende Wange 44 weist auf einer dem Rücken 46 des Anlageabschnitts 36 abgewandten Seite eine die Seitenwand 14 hintergreifende Rastnase 48 auf.

Zur Montage des Adapters 10 an dem Hauptbügel 12 wird der Einsteckbolzen 22 in die Aufnahmeöffnung 20 eingeführt. Dabei befindet sich der Adapter 10 gegenüber dem Hauptbügel 12 in einer mit der Linie 50 angedeuteten Lage. Nachdem der Einsteckbolzen 22 in den Hauptbügel 12 eingesteckt ist, wird der Adapter 10 in die in der Figur 1 dargestellten Lage verschwenkt. Die Rastnase 48 hinterrastet dann die Seitenwand 14, wie es in der Figur 3 dargestellt ist.

In der Figur 3 ist neben dem Hauptbügel 12 und dem Adapter 10 außerdem ein an dem Wischblatt angeordneten Wischgummi 51 dargestellt.

Erfindungsgemäß ist ferner denkbar, dass an der dem Rücken 46 abgewandten Kante 52 des Schenkels 42 ebenfalls eine nicht dargestellte Rastnase vorgesehen ist, die die Seitenwand 16 hinterrastet.

Wie in der Figur 2 deutlich wird, weist die Zylinderaussparung 24 auf ihrer der Einführöffnung 30 abgewandten Seite eine Entlüftungsöffnung 54 auf.

Der in der Figur 2 mit c bezeichnete Abstand zwischen dem ersten Anlageabschnitt 32 und dem zweiten Anlageabschnitt 36 ist so bemessen, dass bei am Kopplungsabschnitt 28 montiertem Adapter 10 eine spielarme Führung gewährleistet wird. Ferner ist der Durchmesser d der Zylinderaussparung 24 derart gewählt, dass eine spielarme Führung mit dem Gelenkbolzen 26 gewährleistet wird.

Der in den Figuren 1 bis 3 dargestellte Adapter 10 ist im montierten Zustand drehfest am Hauptbügel 12 gehalten.

Der in den Figuren 4 bis 6 dargestellte Adapter 100 ist im Gegensatz zum Adapter 10 nicht am Hauptbügel 12, sondern am Kopplungsabschnitt 28 des Wischerarms drehfest gehalten. Der Adapter 100 weist hierfür im Bereich seines im Querschnitt U-förmig ausgebildeten zweiten Anlageabschnitts 36 zwei nach außen ragende Rastnasen 56 auf. Die Rastnasen ragen im montierten Zustand, wie insbesondere Figur 5 entnommen werden kann, in am Kopplungsabschnitt 28 vorhandene Rastaussparungen 58. Der in den Figuren 4 bis 6 dargestellte Kopplungsabschnitt 28 entspricht im wesentlichen einem Kopplungsabschnitt, wie er aus der WO 00/73113 A1 bekannt geworden ist.

An den dem Rücken 46 abgewandten Kanten 52 des Adapters 100 sind Betätigungsabschnitte 60 vorgesehen, die eine Demontage des Adapters 100 vom Kopplungsabschnitt 28 ermöglichen. Die Betätigungsabschnitte 60 werden zur Demontage in Richtung der Pfeile 62 aufeinander zu bewegt. Hierdurch gelangen die Rastnasen 56 aus den Rastaussparungen 58, und der Adapter 100 kann zum Lösen vom Kopplungsabschnitt 28 um die Achse der Zylinderaussparung 24 beziehungsweise des Gelenkbolzens 26 verschwenkt werden.

Der Adapter 100 gemäß den Figuren 4, 5 und 6 hat den Vorteil, dass wenn das Wischblatt samt Adapter 100 ausgetauscht wird, sämtliche Verschleißteile erneuert werden. Der Kopplungsabschnitt 28 unterliegt dann keinem Verschleiß.

Aufgrund des erfindungsgemäßen Adapters 10, 100 ist es möglich, bekannte Bügelwischblätter an den eigentlich für Flachwischblätter vorgesehenen Kopplungsabschnitt 30 anzuordnen.

## Patentansprüche

1. Adapter (10, 100) zur Adaption eines Hauptbügels (12) eines Wischblatts mit dem Kopplungsabschnitt (28) eines Wischarms einer Wischvorrichtung,
mit einem einendig gehaltenen Einsteckbolzen (22) zur seitlichen Einführung in eine sich quer zur Wischblattlängsachse erstreckende Aufnahmeöffnung (20) am Hauptbügel (12),
mit einer am Einsteckbolzen (22) vorgesehenen, eine Einführöffnung (30) aufweisenden Zylinderaussparung (24) zur Aufnahme eines Gelenkbolzens (26) des Kopplungsabschnitts (28) des Wischarms,
wobei im Bereich der Einführöffnung (30) ein erster Anlageabschnitt (32) vorgesehen ist zur Anlage des den Gelenkbolzen (26) haltenden Bereiches des Kopplungsabschnitts (28), **dadurch gekennzeichnet, daß** der Adapter (10) einen auf der der Einführöffnung (30) abgewandten Seite angeordneten zweiten Anlageabschnitt (36) aufweist zur Anlage des Anschlages (38) eines den Adapter (10, 100) im montierten Zustand wenigstens abschnittsweise übergreifenden Ansatzes (40) des Kopplungsabschnitts (28).

2. Adapter (10, 100) nach Anspruch 1, **dadurch gekennzeichnet, dass** der erste (32) und/oder der zweite Anlageabschnitt (36) in Querrichtung derart erhaben ausgebildet ist, dass in am Hauptbügel (12) montierten Zustand die jeweilige Seitenwand (14, 16) des Hauptbügels (12) überragt wird.

3. Adapter (10, 100) nach Anspruch 1 oder 2, **dadurch gekennzeichnet, dass** der erste Anlageabschnitt (32) in Wischblattlängsrichtung von dem zweiten Anlageabschnitt (36) beabstandet angeordnet ist.

4. Adapter (10, 100) nach Anspruch 1, 2 oder 3, **dadurch gekennzeichnet, dass** die Zylinderaussparung (24) als Durchgangsloch oder als Sackloch ausgebildet ist.

5. Adapter (10, 100) nach einem der vorhergehenden Ansprüche, **dadurch gekennzeichnet, dass** der zweite Anlageabschnitt (36) wenigstens ansatzweise eine Wange (44, 42) aufweist, die im montierten Zustand wenigstens eine Seitenwand (14, 16) des Hauptbügels (12) wenigstens bedingt umgreift.

6. Adapter (10, 100) nach einem der vorhergehenden Ansprüche, **dadurch gekennzeichnet, dass** der zweite Anlageabschnitt (36) im Querschnitt L-förmig oder U-förmig ausgebildet ist.

7. Adapter (10, 100) nach einem der vorhergehenden Ansprüche, **dadurch gekennzeichnet, dass** die sich in Querrichtung erstreckende Breite des zweiten Anlageabschnitts (36) im montierten Zustand weitgehend formschlüssig vom Ansatz und Anschlag (38, 40) des Kopplungsabschnitts (28) des Wischarms umgriffen wird.

8. Adapter (10, 100) nach einem der vorhergehenden Ansprüche, **dadurch gekennzeichnet, dass** der Adapter (10, 100) im montierten Zustand drehfest am Hauptbügel (12) gehalten ist.

9. Adapter (10, 100) nach einem der vorhergehenden Ansprüche, **dadurch gekennzeichnet, dass** der Adapter (10, 100) im montierten Zustand drehfest am Kopplungsabschnitt (28) des Wischarms gehalten ist.

10. Adapter (10, 100) nach einem der vorhergehenden Ansprüche, **dadurch gekennzeichnet, dass** der Adapter (10, 100) wenigstens einen Rastabschnitt (48, 56) zur Verrastung mit dem Hauptbügel (12) und/oder dem Kopplungsabschnitt (28) aufweist.

11. Adapter (10, 100) nach einem der vorhergehenden Ansprüche, **dadurch gekennzeichnet, dass** der Rastabschnitt bzw. die Rastabschnitte (48, 56) am zweiten Anlageabschnitt (36) angeordnet sind.

12. Adapter (10, 100) nach einem der vorhergehenden Ansprüche, **dadurch gekennzeichnet, dass** der Rastabschnitt bzw. die Rastabschnitte an dem freien Ende (52) bzw. den freien Enden der Wangen (42, 44) des zweiten Anlageabschnitts (36) angeordnet sind.

13. Adapter (10, 100) nach einem der vorhergehenden Ansprüche, **dadurch gekennzeichnet, dass** der Adapter (10, 100) zwischen dem Einsteckbolzen (22) und dem zweiten Anlageabschnitt (36) einen sich in Wischblattlängsrichtung erstreckenden Schenkel (42) aufweist, der im montierten Zustand wenigstens abschnittsweise an einer Seitenwand (16) des Hauptbügels (12) anliegt.

14. Adapter (10, 100) nach Anspruch 13, **dadurch gekennzeichnet, dass** der Schenkel (42) die Seitenwände in des Hauptbügels (12) nicht überragt.

## Claims

1. Adapter (10, 100) for adapting a main yoke (12) of a wiper blade to the coupling section (28) of a wiper arm of a wiper device,
comprising an insertion pin (22) held at one end for lateral introduction into a receiving opening (20) on the main yoke (12), said receiving opening extending transversely to the longitudinal axis of the wiper blade,
comprising a cylindrical cutout (24) for receiving a hinge pin (26) of the coupling section (28) of the wiper arm, said cylindrical cutout being provided on the insertion pin (22) and having an insertion opening (30),
wherein a first bearing section (32) is provided in the region of the insertion opening (30) for the bearing of the region of the coupling section (28) which holds the hinge pin (26), **characterised in that**
the adapter (10) has a second bearing section (36) on the side remote from the insertion opening (30) for the bearing of the stop (38) of a projection (40) of the coupling section (28) which engages at least in part over the adapter (10, 100) in the assembled state.

2. Adapter (10, 100) according to claim 1, **characterised in that** the first (32) and/or the second bearing section (36) is designed to be raised in the transverse direction in such a way as to protrude beyond the respective side wall (14, 16) of the main yoke (12) when mounted on the main yoke (12).

3. Adapter (10, 100) according to claim 1 or 2, **characterised in that** the first bearing section (32) is arranged at a distance from the second bearing section (36) in the longitudinal direction of the wiper blade.

4. Adapter (10, 100) according to claim 1, 2 or 3, **characterised in that** the cylindrical cutout (24) is designed as a through-hole or as a blind hole.

5. Adapter (10, 100) according to one of the preceding claims, **characterised in that** the second bearing section (36) has at least in some places a cheek (44, 42) which engages at least to a limited extent around at least one side wall (14, 16) of the main yoke (12) in the assembled state.

6. Adapter (10, 100) according to one of the preceding claims, **characterised in that** the second bearing section (36) is designed to be L-shaped or U-shaped in cross section.

7. Adapter (10, 100) according to one of the preceding claims, **characterised in that** the width of the second bearing section (36) in the transverse direction is engaged around in a largely form-fitting manner in the assembled state by the projection and stop (38, 40) of the coupling section (28) of the wiper arm.

8. Adapter (10, 100) according to one of the preceding claims, **characterised in that** the adapter (10, 100) is held non-rotatably on the main yoke (12) in the assembled state.

9. Adapter (10, 100) according to one of the preceding claims, **characterised in that** the adapter (10, 100) is held non-rotatably on the coupling section (28) of the wiper arm in the assembled state.

10. Adapter (10, 100) according to one of the preceding claims, **characterised in that** the adapter (10, 100) has at least one latching section (48, 56) for latching to the main yoke (12) and/or to the coupling section (28).

11. Adapter (10, 100) according to one of the preceding claims, **characterised in that** the latching section or latching sections (48, 56) are arranged on the second bearing section (36).

12. Adapter (10, 100) according to one of the preceding claims, **characterised in that** the latching section or latching sections are arranged at the free end (52) or free ends of the cheeks (42, 44) of the second bearing section (36).

13. Adapter (10, 100) according to one of the preceding claims, **characterised in that** the adapter (10, 100) has, between the insertion pin (22) and the second bearing section (36), a leg (42) which extends in the longitudinal direction of the wiper blade and which bears at least in part against a side wall (16) of the main yoke (12) in the assembled state.

14. Adapter (10, 100) according to claim 13, **characterised in that** the leg (42) does not protrude beyond the side walls in the main yoke (12).

## Revendications

1. Raccord (10, 100) permettant l'adaptation d'un étrier principal (12) d'un balai d'essuie-glace avec la section d'accouplement (28) d'un bras d'essuie-glace d'un dispositif d'essuie-glace,
comportant une cheville d'enfichage (22) maintenue à une extrémité pour l'introduction latérale dans une ouverture de réception (20) s'étendant transversalement par rapport à l'axe longitudinal du balai d'essuie-glace sur l'étrier principal (12),
comportant un évidement cylindrique (24) prévu sur la cheville d'enfichage (22), présentant une ouverture d'introduction (30) permettant de recevoir un axe d'articulation (26) de la section d'accouplement (28) du bras d'essuie-glace,
moyennant quoi, dans la zone de l'ouverture d'introduction (30), on prévoit une première section de positionnement (32), permettant de positionner la zone maintenant l'axe d'articulation (26), de la section d'accouplement (28),
**caractérisé en ce que** le raccord (10) présente une deuxième section de positionnement (36) disposée sur le côté opposé à l'ouverture d'introduction (30), qui permet de positionner la butée (38) d'un insert (40) recouvrant au moins par section le raccord (10, 100) à l'état monté de la section d'accouplement (28).

2. Raccord (10, 100) selon la revendication 1, **caractérisé en ce que** la première (32) et/ou la deuxième sections de positionnement (36) sont configurées en relief dans la direction transversale de telle sorte que, à l'état monté sur l'étrier principal (12), la face latérale (14, 16) respective de l'étrier principal (12) présente un élément en saillie.

3. Raccord (10, 100) selon la revendication 1 ou 2, **caractérisé en ce que** la première section de positionnement (32) est disposée à une certaine distance de la deuxième section de positionnement (36) dans la direction longitudinale du balai d'essuie-glace.

4. Raccord (10, 100) selon l'une quelconque des revendications 1, 2 ou 3, **caractérisé en ce que** l'évidement cylindrique (24) est configuré sous la forme d'un trou traversant ou d'un trou borgne.

5. Raccord (10, 100) selon l'une quelconque des revendications précédentes, **caractérisé en ce que** la deuxième section de positionnement (36) présente au moins, à la manière d'un insert, une joue (44, 42), qui, à l'état monté, enveloppe au moins une paroi latérale (14, 16) de l'étrier principal (12), au moins dans certaines conditions.

6. Raccord (10, 100) selon l'une quelconque des revendications précédentes, **caractérisé en ce que** la deuxième section de positionnement (36) est configurée sous forme de L ou de U en coupe.

7. Raccord (10, 100) selon l'une quelconque des revendications précédentes, **caractérisé en ce que** la largeur dans la direction transversale de la deuxième section de positionnement (36), à l'état monté, est largement enveloppée par conjugaison de forme par l'insert et la butée (38, 40) de la section d'accouplement (28) du bras d'essuie-glace.

8. Raccord (10, 100) selon l'une quelconque des revendications précédentes, **caractérisé en ce que** le raccord (10, 100) est maintenu de manière résistante à la rotation sur l'étrier principal (12) à l'état monté.

9. Raccord (10, 100) selon l'une quelconque des revendications précédentes, **caractérisé en ce que** le raccord (10, 100) est maintenu de manière résistante à la rotation sur la section d'accouplement (28) du bras d'essuie-glace à l'état monté.

10. Raccord (10, 100) selon l'une quelconque des revendications précédentes, **caractérisé en ce que** le raccord (10, 100) présente au moins une section d'encliquetage (48, 56) permettant l'encliquetage avec l'étrier principal (12) et/ou la section d'accouplement (28).

11. Raccord (10, 100) selon l'une quelconque des revendications précédentes, **caractérisé en ce que** la section d'encliquetage ou les sections d'encliquetage (48, 56) sont disposées sur la deuxième section de positionnement (36).

12. Raccord (10, 100) selon l'une quelconque des revendications précédentes, **caractérisé en ce que** la section d'encliquetage respectivement les sections d'encliquetage sont disposées sur l'extrémité libre (52) respectivement sur les extrémités libres des joues (42, 44) de la deuxième section de positionnement (36).

13. Raccord (10, 100) selon l'une quelconque des revendications précédentes, **caractérisé en ce que** le raccord (10, 100) présente, entre la cheville d'enfichage (22) et la deuxième section de positionnement (36), une branche (42) s'étendant dans la direction longitudinale du balai d'essuie-glace qui repose, à l'état monté, au moins par section sur une paroi latérale (16) de l'étrier principal (12).

14. Raccord (10, 100) selon la revendication 13, **caractérisé en ce que** la branche (42) ne dépasse pas des parois latérales de l'étrier principal (12).
